# Europäisches Patentamt
# European Patent Office
# Office européen des brevets

(19)

(11) Veröffentlichungsnummer: **0 181 945**
**B1**

(12)

# EUROPÄISCHE PATENTSCHRIFT

(45) Veröffentlichungstag der Patentschrift:
21.09.88

(51) Int. Cl.⁴: **F 16 L 5/02**

(21) Anmeldenummer: 84112786.3

(22) Anmeldetag: 24.10.84

(54) Verfahren zum dichten Einbau eines rohr- oder stangenförmigen Bauteils in eine Aufnahmeöffnung eines Konstruktionskörpers.

(43) Veröffentlichungstag der Anmeldung:
28.05.86 Patentblatt 86/22

(45) Bekanntmachung des Hinweises auf die Patenterteilung:
21.09.88 Patentblatt 88/38

(84) Benannte Vertragsstaaten:
AT CH DE FR GB LI

(56) Entgegenhaltungen:
DE-A-2 901 266
DE-U-8 318 034
FR-A-2 370 221
US-A-2 733 939

(73) Patentinhaber: **Walz, Georg, Nibelungenstrasse 16,
D-7920 Heidenheim/Brenz (DE)**

(72) Erfinder: **Walz, Georg, Nibelungenstrasse 16,
D-7920 Heidenheim/Brenz (DE)**

(74) Vertreter: **Patentanwälte Dipl.- Ing. R. Holzer
Dipl.- Ing. (FH) W. Gallo, Philippine- Welser-
Strasse 14, D-8900 Augsburg (DE)**

LIBER, STOCKHOLM 1988

## Beschreibung

Die Erfindung betrifft ein Verfahren zum dichten Einbau eines rohr- oder stangenförmigen Bauteils in eine Aufnahmeöffnung eines Konstruktionskörpers nach dem Oberbegriff des Anspruchs 1.

Das Hauptanwendungsgebiet der Erfindung ist der dichte Einbau von Wanddurchführungen für Kabel, Rohrleitungen und dergleichen in Gebäude, insbesondere für die Hauseinführung von Versorgungsleitungen (Elektrohauptkabel, Gas-, Wasser- und Fernheizungsleitungen) in Gebäude.

Hauseinführungen für Versorgungsleitungen von Gebäuden werden im allgemeinen mit Futter- oder Schutzrohren ausgeführt, die in einem entsprechend hergestelltem Mauerdurchbruch der Kellerwand eingebaut werden und durch welche dann die betreffende Versorgungsleitung hindurchgeführt wird.

Der Einbau solcher Schutz- bzw. Futterrohre erfolgt bekanntermaßen dadurch, daß der Mauerdurchbruch etwas größer hergestellt wird, so daß zwischen der Maueröffnungswand und dem Hauseinführungsrohr ein Zwischenraum verbleibt, der mit Mörtel ausgefüllt wird. Der Mörtel dient dabei sowohl zur mechanisch festen Verankerung des Einführungsrohres im Mauerwerk als auch zur Abdichtung des Rohres gegen das Mauerwerk.

Hierbei stellt sich bekanntermaßen das Problem, den Mörtel bzw. die Füllmasse derart in den Ringspalt zwischen dem Einführungsrohr und der Maueröffnungswand einzubringen, daß er diesen Ringspalt vollständig und hohlraumfrei ausfüllt und sowohl an der Rohraußenwand als auch an der im allgemeinen rauhen und meist unregelmäßigen Maueröffnungswand satt und dichtend anliegt.

Dies läßt sich in der Praxis allerdings kaum bewerkstelligen, da der Füllmörtel das Bestreben hat, im unteren Bereich des Ringspalts zusammenzulaufen und außerdem, wenn er mit dem saugfähigen Mauerwerk in Berührung kommt, sehr schnell zu stocken, so daß es außerordentlich schwierig ist, den Füllmörtel überhaupt in die ganze Tiefe der Mauerdurchführungsöffnung einzubringen. Auch das Einspritzen dünnflüssig angemachten Füllmörtels gelingt kaum, da ein Zementmörtel bei Anwendung mechanischen Druckes zum Spritzen sofort mit Entmischungserscheinungen reagiert, indem das Wasser herausgedrückt wird und der Mörtel stockt. Aber auch mit Füllmassen, die solche Erscheinungen nicht zeigen, stellt das völlige hohlraumfreie Ausfüllen des Ringspalts ein nur schwer lösbares Problem dar.

Es sind auch schon Versuche unternommen worden, die oben erwähnten Problem, insbesondere beim Einbau von Hauseinführungsrohren für Versorgungsleitungen in Kelleraußenwänden, in den Griff zu bekommen. So wird beispielsweise in der DE-A-2 901 286 vorgeschlagen, das Futterrohr an seinem einen Ende mit einem festen Radialflansch und an seinem anderem Ende mit einem darauf axial verschiebbar sitzenden, sich an der betreffenden Wandfläche abstützenden Radialflansch sowie einer im Bereich dieses verschiebbaren Radialflansches befindlichen Spanneinrichtung, bestehend aus einem Außengewinde des Futterrohres und einer darauf aufgeschraubten, sich an dem verschiebbaren Ringflansch abstützenden Spannmutter auszubilden. Die Füllmasse wird dabei vor dem Einsetzen des Futterrohres in die Mauerdurchführungsöffnung zwischen den beiden Radialflanschen auf die Futterrohraußenfläche aufgebracht, und nach dem Einsetzen des Futterrohres wird die Spannmutter angezogen, so daß das Futterrohr axial um eine gewisse Distanz durch den verschiebbaren, sich an der Wandaußenfläche abstützenden Radialflansch hindurchgezogen und dadurch der feste Radialflansch und der verschiebbare Radialflansch einander angenähert werden, um die dazwischen befindliche Füllmasse fest zwischen der Maueröffnungswand und dem Futterrohr zu verpressen. Zu diesem Zweck sind die beiden Ringflansche auch noch mit Dichtungen ausgestattet.

Zwar läßt sich ohne Zweifel mittels des bekannten Vorschlags ein festes, hohlraumfreies und abdichtendes Verpressen der Füllmasse zwischen Futterrohr und Maueröffnungswand bewerkstelligen, aber der dafür erforderliche konstruktive Aufwand des Futterrohres mit seinen Flanschen, Dichtungen und der Spinnvorrichtung erscheint unvertretbar hoch.

Im DE-U-8 318 034 wird vorgeschlagen, das Futterrohr mit einem im Gestalt einer Spirale schraubenwendelförmig um die Futterrohraußenfläche herumverlaufenden Wiederstandskörper auszubilden, um auf diese Weise Strömungswiederstände für die einzubringende Füllmasse in Form von Engstellen zwischen dem Futterrohrumfang und der Maueröffnungswand zu schaffen, mit dem Ziel, daß die einzubringende Füllmasse nicht nur im unteren Bereich des Ringspalts zwischen Durchführungsrohr und Maueröffnungswand zusammenläuft, sondern durch die so geschaffenen Strömungswiderstände gezwungen wird, den ganzen Hohlraum auszufüllen. Zumindest bei Füllmassen auf Zementbasis dürfte dieser bekannte Vorschlag aber wegen der Entmischungstendenz des Zementmörtels bei Druckanwendung und auch wegen des schnellen Versteifungsbeginns des Mörtels bei Berührung mit saugendem Mauerwerk kaum praktikabel sein. Aber abgesehen davon erfordert auch dieser bekannte Vorschlag eine verhältnismäßig aufwendige konstruktive Ausbildung des Futterrohres.

Für die Erfindung stellt sich daher die Aufgabe, ein Verfahren der eingangs genannten Gattung zu schaffen, das einen Einbau von Mauerdurchführungsrohren oder beliebigen anderen rohr- oder stangenförmigen Bauteilen in eine entsprechende Aufnahmeöffnung derart ermöglicht, daß mit nur geringem konstruktivem Aufwand und bei schneller und einfacher Einbaumöglichkeit ein vollständiges, hohlraumfreies Ausfüllen des Ringspalts zwischen der Aufnahmeöffnungswand und dem Durchführungsrohr oder sonstigem Bauteil erreicht werden kann.

Diese Aufgabe wird gemäß der Erfindung durch die im kennzeichnenden Teil des Anspruchs 1 angegebenen Maßnahmen gelöst.

Vorteilhafte Ausgestaltungen des erfindungsgemäßen Verfahrens, die für sich selbst sprechen, sind Gegenstand der Ansprüche 2 bis 5.

Bei dem erfindungsgemäßen Verfahren kann ein gewöhnliches Durchführungsrohr oder sonstiges Bauteil mit glatter Außenfläche verwendet werden, auf welches das schraubenwendelförmige Hilfselement aufgeschoben wird. Vor dem Einsetzen des Durchführungsrohres oder sonstigem Bauteil in die Aufnahmeöffnung wird, während das Hilfselement in mit gegenseitigen Axialabständen auseinanderliegenden Windungen auf dem Bauteil gehalten wird, die Füllmasse, beispielsweise ein Füllmörtel, in den Windungszwischenräumen auf die Bauteilaußenfläche aufgebracht, und nach dem Einsetzen des so vorbereiteten Bauteils in die Aufnahmeöffnung wird durch axiales Zusammendrücken der Hilfselementwindungen die Füllmasse in den Ringspalt zwischen dem Durchführungsrohr oder sonstigem Bauteil und der Aufnahmeöffnungswand satt verpreßt. Hierbei übt das zweckmäßigerweise aus Rundmaterial hergestellte Hilfselement auch eine Keilwirkung auf die Füllmasse aus, so daß die Füllmasse sowohl gegen die Außenwand des Durchführungsrohres oder sonstigen Bauteils und die Maueröffnungswand gedrückt wird.

Bei Verwendung eines als Schraubenzugfeder ausgebildeten Hilfselements nach Anspruch 2, wobei die Feder gespannt wird, um die Füllmasse in die auseinandergezogenen Windungszwischenräume einbringen zu können, erfolgt das Verpressen der Füllmasse in dem Ringspalt beim Entspannen der Feder durch die sich zusammenziehenden Windungen selbsttätig.

In jedem Fall kann die Verdichtung der Füllmasse während des Zusammendrückens bzw. Zusammenziehens der Windungen des Hilfselements noch durch mechanische Erschütterungen, beispielsweise durch Klopfen gegen das Durchführungsrohr oder sonstige Bauteil, oder durch Drehen des Hilfselements gefördert werden.

Das vorzugsweise als Schraubenfeder ausgebildete, einfach und billig herstellbare Hilfselement und die damit geschaffene Möglichkeit zum einfachen und schnellen Einbringen der Füllmasse und zu deren wirksamen Verpressen ermöglicht den mechanisch festen und dichten Einbau von Durchführungsrohren oder sonstigen Bauteilen mit nur minimalem Aufwand an Material und Zeit.

Dabei stellt das Hilfselement nicht nur ein Hilfsmittel zum Einbringen und Verpressen der Füllmasse dar, sondern bildet auch eine ausgezeichnete Bewehrung der Füllmasse.

Bei der Füllmasse kann es sich, wie schon gesagt, um einen Füllmörtel, aber je nach dem Anwendungsfall auch um eine beliebige andere plastische und nach dem Einbau aushärtende Masse handeln.

Das Fixieren des als Schraubenzugfeder ausgebildeten Hilfselements im auseinandergezogenen Zustand läßt sich einfach durch Arretieren der äußeren Windungen mit Hilfe von zeitweise in die Wand des Durchführungsrohres oder sonstigen Bauteils eingesteckten Stiften bewerkstelligen, die nachher zum Entspannen der Feder wieder entfernt werden.

Es liegt auf der Hand, daß der Anwendungsbereich der Erfindung, wie schon angedeutet, sich nicht auf den Einbau von Schutz- oder Futterrohren als Hauseinführungen für Versorgungsleitungen oder dergleichen gemäß Anspruch 6 beschränkt, sondern sich grundsätzlich für den Einbau von rohr- oder stängenförmigen Bauteilen in entsprechende Aufnahmeöffnungen in Bauwerkswänden, Böden oder Decken oder sonstigen Konstruktionskörpern eignet. Bei den Aufnahmeöffnungen kann es sich sowohl um Durchgangsöffnungen als auch um Sacklöcher handeln, wobei das Zusammendrücken der Windungen des Hilfselements im ersteren Fall von beiden Öffnungsseiten her und im letzteren Fall nur von der einen Öffnungsmündung her erfolgt.

Ein nach dem erfindungsgemäßen Verfahren in eine Wanddurchführungsöffnung einzubauendes Durchführungsrohr, insbesondere als Hauseinführungsrohr für Installationsleitungen, ist Gegenstand der Ansprüche 7 bis 10.

Nachstehend wird ein Ausführungsbeispiel der Erfindung anhand der anliegenden Zeichnungen kurz erläutert. In den Zeichnungen zeigt:

Fig. 1 ein in eine Mauerdurchführungsöffnung eingesetztes Hauseinführungsrohr vor dem Verpressen des Füllmörtels,

Fig. 2 die Anordnung nach Fig. 1 nach dem Verpressen des Füllmörtels, und

Fig. 3 eine Abwandlung der Anordnung nach Fig. 1.

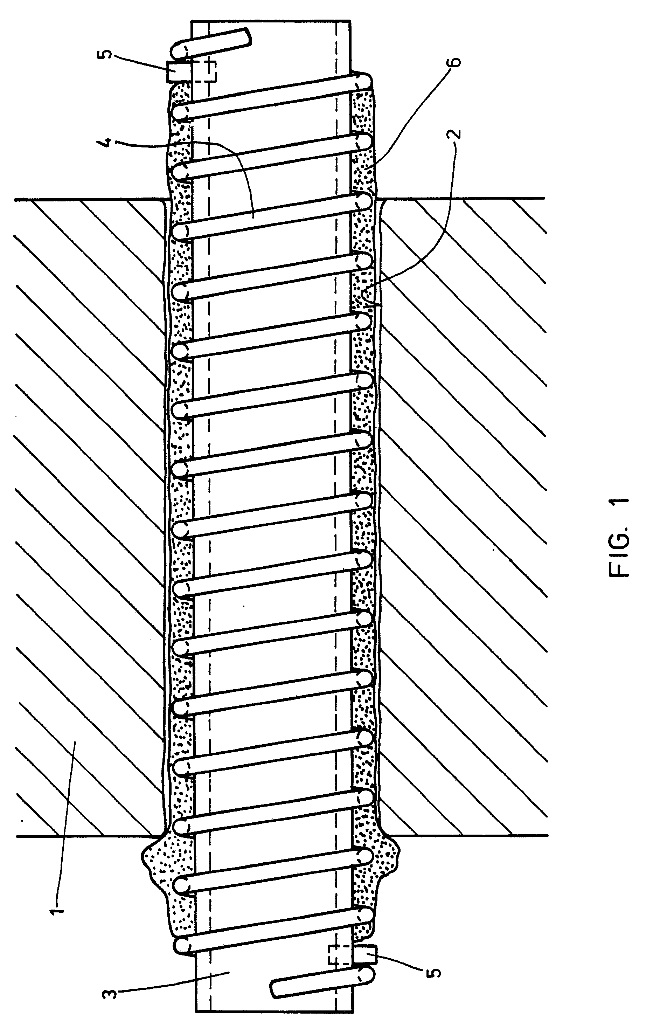

Die Fig. 1 zeigt im Schnitt eine Mauer 1 mit einem in eine Mauerdurchführungsöffnung 2 eingesetzten Hauseinführungsrohr 3, das beispielsweise für die Hauseinführung einer Gas- oder Wasserleitung dient.

Auf den Außenumfang des Einführungsrohres 3 ist ein Hilfselement 4 in Form einer Schraubenzugfeder aufgeschoben, die sich in Fig. 1 im gespannten, d. h. auseinandergezogenen Zustand befindet und in diesem Zustand durch Verstiftungen 5 an den beiden Federenden auf dem Rohr 3 fixiert ist. In den Windungszwischenräumen der auseinandergezogenen Zugfeder 4 befindet sich ein Füllmörtel 6, der vor dem Einsetzen des Rohres 3 in die Mauerdurchführungsöffnung 2 auf die Außenfläche des Rohres 3 aufgebracht worden ist.

Nachdem das Einführungsrohr 3 mit der darauf befindlichen, auseinandergezogenen Feder 4 und dem in den Windungszwischenräumen der Feder befindlichen Füllmörtel 6 in der in Fig. 1 dargestellten Weise in die Mauerdurchführungsöffnung 2 eingesetzt worden ist, werden die Verstiftungen 5 gelöst, so daß sich die Feder 4 zusammenziehen kann und die sich unter der Federkraft aufeinanderzu bewegenden Federwindungen den dazwischen befindlichen Füllmörtel in dem Ringspalt zwischen der Wandung der Mauerdurchführungsöffnung 2 und der Rohraußenwandung fest verpressen, so daß der Füllmörtel 6 diesen Ringspalt satt und hohlraumfrei ausfüllt. Das Verpressen des Mörtels kann noch durch Drehen der Feder 4 auf dem Rohr 3 oder durch leichtes Klopfen gegen das Rohr 3 unterstützt werden.

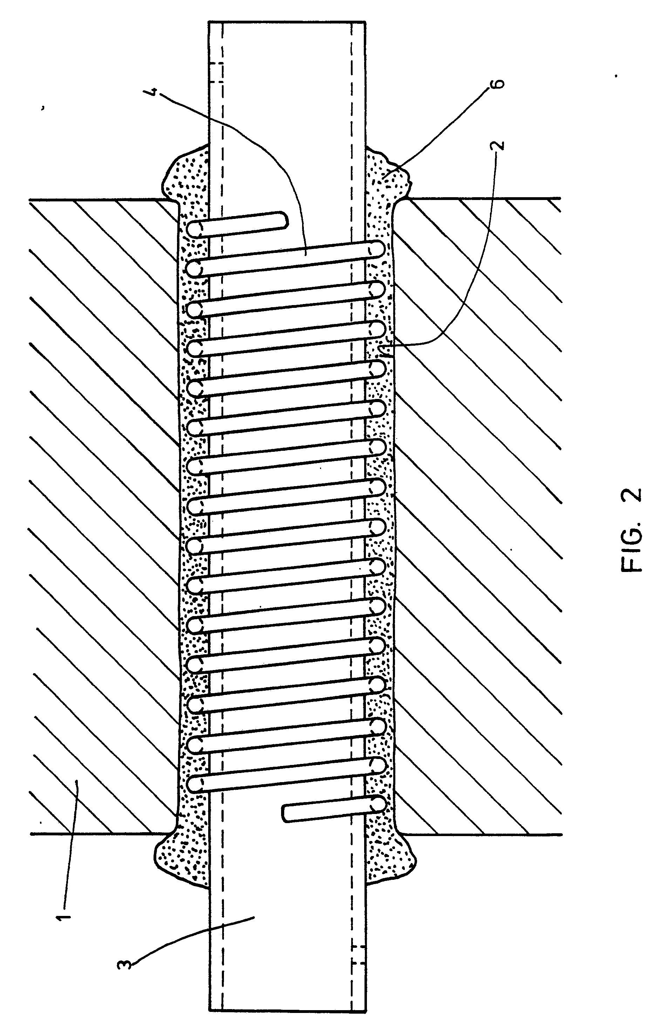

Fig. 2 zeigt die in Fig. 1 dargestellte Anordnung nach dem Verpressen des Füllmörtels 6 durch Zusammenziehen der Feder 4, die sich nun vollständig innerhalb der Mauerdurchführungsöffnung 3 befindet und eine ausgezeichnete Bewehrung des Füllmörtels 6 darstellt.

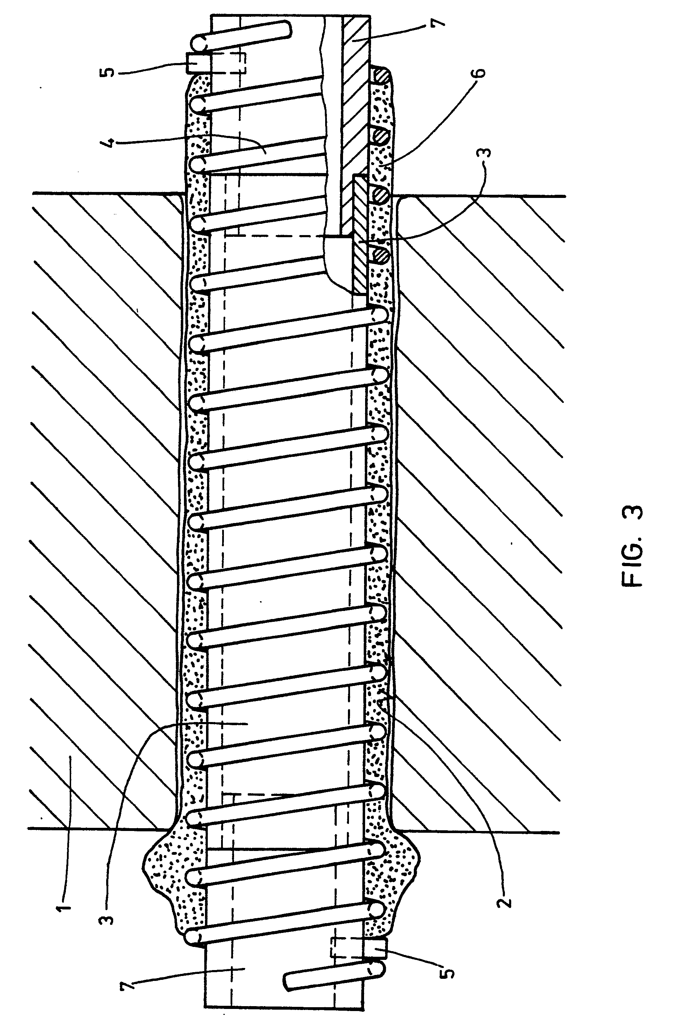

Um die Feder 4 im auseinandergezogenem Zustand, nämlich zum Aufbringen des Füllmörtels in die Windungszwischenräume, aufnehmen zu können, muß das Rohr 3 eine entsprechende Länge haben, die natürlich größer als die Länge der Mauerdurchführungsöffnung ist. Soll das Rohr 3 nicht oder nur geringfügig über die Mauerdurchführungsöffnung 2 überstehen, kann die Anordnung gemäß Fig. 3 abgewandelt werden, indem auch ein entsprechend kurzes Einführungsrohr 3 beiderseits ein Verlängerungsstück 7 aufgesteckt wird, das zur Aufnahme und Fixierung der Federenden bei auseinandergezogener Feder 4 dient. Nach dem Zusammenziehen der Feder 4 und Verpressen des Füllmörtels 6, also nach Erreichen des in Fig. 2 dargestellen Zustands, können die Verlängerungsstücke 7 wieder von den Enden des Rohres 3 abgenommen und anderweitig wiederverwendet werden.

**Patentansprüche**

1. Verfahren zum dichten Einbau eines rohr- oder stangenförmigen Bauteils (3) in eine Aufnahmeöffnung (2) eines Konstruktionskörpers (1), wobei das Bauteil (3) in die etwas größere Aufnahmeöffnung (2) eingesetzt und unter Verwendung eines schraubenwendelförmigen, um die Außenfläche des Bauteils herumverlaufenden Hilfselements (4) eine Füllmasse (6) in den Ringspalt zwischen dem Bauteil und der Aufnahmeöffnungswand eingebracht wird, gekennzeichnet durch folgende Maßnahmen:

a) das verwendete Hilfselement (4) sitzt mit seinen Windungen axial elastisch auseinander ziehbar und zusammendrückbar sowie verscheibbar auf dem Bauteil (3),

b) die Füllmasse (6) wird vor dem Einsetzen des Bauteils (3) in die Aufnahmeöffnung (2), während sich die Windungen des Hilfselements auf dem Bauteil in mit gegenseitigen Axialabständen auseinanderliegendem Zustand befinden, in den Windungszwischenräumen auf die Bauteilaußenfläche aufgebracht und

c) nach dem Einsetzen des so vorbereiteten Bauteils (3) in die Aufnahmeöffnung (2) wird die Füllmasse (6) durch axiales Zusammendrücken der Windungen des Hilfselements (4) satt in den Ringspalt zwischen dem Bauteil und der Aufnahmeöffnungswand eingepreßt.

2. Verfahren nach Anspruch 1, dadurch gekennzeichnet, daß eine Schraubenzugfeder als Hilfselement (4) verwendet und vor dem Aufbringen der Füllmasse (6) auf die Bauteilaußenfläche auf dem Bauteil (3) auseinandergezogen und im so gespannten Zustand auf dem Bauteil fixiert wird, und daß nach dem Einsetzen des Bauteils in die Aufnahmeöffnung (2) die Fixierung der gespannten Schraubenfeder gelöst wird.

3. Verfahren nach Anspruch 1 oder 2 zum Einbau eines Bauteils (3) mit kreisrundem Querschnitt in eine entsprechende Aufnahmeöffnung (2), dadurch gekennzeichnet, daß das Hilfselement (4) während des Zusammendrückens seiner Windungen nach dem Einsetzen des Bauteils in die Aufnahmeöffnung zusätzlich um die Bauteillängsachse gedreht wird.

4. Verfahren nach Anspruch 1 oder 2 zum Einbau eines Bauteils (3) in eine Wanddurchführungsöffnung (2), dadurch gekennzeichnet, daß das Hilfselement (4) etwa im Bereich seiner mittleren Windung axial unverschiebbar auf dem Bauteil festgelegt wird und seine Windungen nach dem Einsetzen des Bauteils in die Wanddurchführungsöffnung von beiden Enden der Durchführungsöffnung her zusammengedrückt werden.

5. Verfahren nach einem der Ansprüche 1 bis 4 zum Einbau eines Bauteils (3), das im Einbauzustand nicht oder nur um eine kurze Distanz aus der Aufnahmeöffnung herausragt, dadurch gekennzeichnet, daß während des Einbauvorgangs ein Verlängerungsstück (7) auf das Bauteil (3) aufgesetzt wird, welches den Endbereich des Hilfselements (4) aufnimmt, solange sich dessen Windungen in auseinanderliegendem Zustand befinden.

6. Verfahren nach einem der Ansprüche 1 bis 5 zum Einbau von Schutz- oder Futterrohren (3) zur Wanddurchführung für Kabel, Rohrleitungen oder dergleichen in eine Wanddurchführungsöffnung.

7. Durchführungsrohr (3), insbesondere Hauseinführungsrohr, für den Einbau in eine Wanddurchführungsöffnung (2), mit einem schraubenwendelförmig um seine Außenfläche herumverlaufenden Hilfselement (4), dadurch gekennzeichnet, daß das Hilfselement (4) als mit seinen Windungen auf der Rohraußenfläche axial elastisch auseinanderziehbare und zusammendrückbare sowie verschiebbare Schraubenwendel ausgebildet ist.

8. Durchführungsrohr nach Anspruch 7, dadurch gekennzeichnet, daß die Schraubenwendel (4) als Zugfeder ausgebildet ist.

9. Durchführungsrohr nach Anspruch 8, dadurch gekennzeichnet, daß Verstiftungen (5) zum axialen Fixieren der Federenden bei auseinandergezogener Zugfeder (4) auf der Rohraußenfläche vorgesehen sind.

10. Durchführungsrohr nach Anspruch 8 oder 9, dadurch gekennzeichnet, daß mindestens einem Rohrende ein lösbar aufgesetztes Verlängerungsstück (7) zur Aufnahme des betreffenden Federendbereiches bei auseinandergezogener Zugfeder (4) zugeordnet ist.

**Claims**

1. A method of inserting a tubular or bar-shaped structural member (3) tightly into a location hole (2) in a construction element (1), wherein the structural member (3) is inserted into the slightly larger location hole (2) and, by means of an auxiliary element (4) having the form of a helical coil and extending around the outer surface of the structural member, a filling compound (8) is injected into the annular gap between the structural member and the wall with the location hole, characterized by the following steps:

a) the auxiliary element (4) used is positioned with its turns on the structural member (3) so as to allow extension and compression as well as sliding in axial direction,

b) prior to insertion of the structural member (3) into the location hole (2), while the turns of the auxiliary element are stretched along the structural member in axial distances from one another, the filling compound (6) is injected into the gaps between the turns onto the outer surface of the structural member, and

c) after insertion of the thusly prepared structural member (3) into the location hole (2), the filling compound (6) is grouted tightly into the annular gap between the structural member and the wall of the location hole by forcing the turns of the auxiliary element (4) together in axial direction.

2. The method as set forth in claim 1, characterized in that a helical tension spring is used as auxiliary element (4) and, prior to placing the filling compound (6) on the outer surface of said structural member, the spring is pulled apart on the structural member (3) and is fixed on the structural member while stretched in this manner, whereupon, after insertion of the structural member into the location hole (2), the locking means of the stretched helical spring are removed.

3. The method as set forth in claim 1 or 2 for inserting a structural member (3) with a circular cross section into an appropriate location hole (2), characterized in that the auxiliary element (4), during the forcing together of its turns after insertion of the structural member into the location hole, is also rotated about the longitudinal axis of the structural member.

4. The method as set forth in claim 1 or 2 for the insertion of a structural member (3) into a lead-in wall opening (2), characterized in that the auxiliary element (4), substantially in the area of its center turn, is locked on the structural member against axial sliding and, after insertion of the structural member into the lead-in wall opening, its turns are forced together from both ends of the lead-in wall opening.

5. The method as set forth in any one of claims 1 to 4 for the insertion position, does not, or only slightly, project from the location hole, characterized in that in the course of the insertion, an extension piece (7) is mounted on the structural member (3), which locates the end region of the auxiliary element (4) as long as its turns are in the stretched state.

8. The method as set forth in any one of claims 1 to 5 for inserting protective or casing tubes (3) for the wall lead-in of cables, pipelines or the like into a lead-in wall opening.

7. A lead-in tube (3), especially a house lead-in tube, for insertion into a lead-in wall opening with an auxiliary element (4) and extending in the form of a helical coil around its outer surface, characterized in that the auxiliary element (4) is designed as a helical coil with its turns being axially and elastically extendable and compressible as well as slidable on the outer tube surface.

8. The lead-in tube as set forth in claim 7, characterized in that the helical coil (4) is designed as a tension spring.

9. The lead-in tube as set forth in claim 8, characterized in that pinned joints (5) are provided for the axial fixation of the spring ends on the outer tube surface when the latter tension spring (4) is in the stretched state.

10. The lead-in tube as set forth in claim 8 or 9, characterized in that a removably mounted extension piece (7) for locating the respective spring end region when the tension spring (4) is in the stretched state, is associated to at least one tube end.

## Revendications

Procédé pour monter de façon étanche un élément de construction (3) en forme de tube ou de barre dans une ouverture de reception (2) pratiqués dans un corps de construction (1), l'élément de construction (3) étant mis en place dans l'ouverture de réception (2) légèrement plus grande et une masse de remplissage (6) étant introduite dans l'interstice annulaire entre l'élément de construction et la paroi de l'ouverture de réception en utilisant un élément auxiliaire (4) hélicoïdal s'étendant autour de la surface extérieure de l'élément de construction, caractérisé par les mesures suivantes:

a) l'élément auxiliaire (4) utilisé est monté sur l'élément de construction (3) de façon déplaçable en translation et de façon que ses spires puissent être étirées et comprimées de manière élastique axialement,

b) la masse de remplissage (6) est appliquée, pendant que les spires de l'élément auxiliaire se trouvent étirées et espacées axialement sur l'élément de construction, dans les espaces entre les spires sur la surface extérieure de l'élément de construction, avant la mise en place de l'élément de construction (3) dans l'ouverture de réception (2), et

c) après la mise en place de l'élément de construction (3) ainsi préparé dans l'ouverture de réception (2), la masse de remplissage (6) est pressée dans l'interstice annulaire entre l'élément de construction et la paroi de l'ouverture de réception par compression axiale des spires de l'élément auxiliaire (4).

2. Procédé selon la revendication 1, caractérisé en ce qu'un ressort hélicoïdal de traction est utilisé comme élément auxiliaire (4) et est étiré sur l'élément de construction (3) avant l'application de la masse de remplissage (6) sur la surface extérieure de l'élément de construction et fixé dans cet état tendu sur l'élément de construction, et qu'après la mise en place de l'élément de construction dans l'ouverture de réception (2), la fixation du ressort hélicoïdal tendu est libérée.

3. Procédé selon la revendication 1 ou 2 pour le montage d'un élément de construction (3) de section circulaire dans une ouverture de réception (2) correspondante, caractérisé en ce que, pendant la compression de ses spires après la mise en place de l'élément de construction dans l'ouverture de réception, l'élément auxiliaire (4) est tourné en plus autour de l'axe longitudinal de l'élément de construction.

4. Procédé selon la revendication 1 ou 2 pour le montage d'un élément de construction (3) dans une ouverture (2) de passage de mur, caractérisé en ce que l'élément auxiliaire (4) est immobilisé en translation axiale sur l'élément de construction à peu près dans la zone de sa spire médiane et ses spires sont comprimées, après la mise en place de l'élément de construction dans l'ouverture de passage de mur, à partir des deux extrémités de l'ouverture de passage.

5. Procédé selon l'une quelconque des revendications 1 à 4 pour le montage d'un élément de construction (3) qui, à l'état monté, ne dépasse pas ou que de peu de l'ouverture de réception, caractérisé en ce que pendant l'opération de montage une pièce de prolongement (7) est raccordée à l'élément de construction (3), pièce qui reçoit la zone d'extrémité de l'élément auxiliaire (4), tant que les spires de ceiui-ci se trouvent à l'état étiré.

6. Procédé selon l'une quelconque des revendications 1 à 5 pour le montage, dans une ouverture de passage de mur, de tubes (3) de protection ou de gainage pour le passags dans le mur de câbles, de tuyaux ou analogues.

7. Tube de traversée (3), notamment tube d'entrée dans des bâtiments, destiné au montage dans une ouverture de passage de mur (2), avec un élément auxiliaire (4) s'étendant en forme d'hélice autour de sa surface extérieure, caractérisé en ce que l'élément auxiliaire (4) est réalisé comme hélice déplaçable et ayant des spires étirables et comprimables de façon élastique axialement sur la surface extérieure du tube.

8. Tube de traversée (7) selon la revendication 7, caractérisé en ce que l'hélice (4) est réalisée comme ressort de traction.

9. Tube de traversée selon la revendication 8, caractérisé en ce que des chevilles (5) sont prévues sur la surface extérieure du tube en vue de la fixation axiale des extrémités de ressort lorsque le ressort de traction (4) est étiré.

10. Tube de traversée selon la revendication 8 ou 9, caractérisé en ce qu'une pièce de prolongement (7) rapportée de façon amovible est associée au moins à une extrémité du tube en vue de la réception de la zone d'extrémité correspondante du ressort de traction (4) lorsque ce dernier est étiré.

FIG. 1

FIG. 2

FIG. 3